# EUROPÄISCHE PATENTSCHRIFT

(11) **EP 2 455 241 B1**
(45) Veröffentlichungstag und Bekanntmachung des Hinweises auf die Patenterteilung: **24.07.2013**
(21) Anmeldenummer: 11008217.9
(22) Anmeldetag: 12.10.2011
(51) Int. Cl.: B60D 1/64, H01R 13/428, H01R 13/50, H01R 13/52, H01R 24/76, H01R 107/00

(54) **Anhängersteckdose für Kraftfahrzeuge**
Connection socket for trailers
Connexion de remorque pour véhicules automobiles

(30) Priorität: 18.11.2010 DE 202010015623 U
(43) Veröffentlichungstag der Anmeldung: 23.05.2012
(73) Patentinhaber: ConWys AG, 6023 Rothenburg (CH)
(72) Erfinder: Wystron, Alexander, 6003 Luzern (CH)
(74) Vertreter: Stenger, Watzke & Ring

(56) Entgegenhaltungen:
- EP-A1- 1 267 453
- WO-A1-2005/124943
- DE-U- 1 951 185
- DE-U1-202007 010 440
- DE-U1-202010 015 648

## Beschreibung

Die Erfindung betrifft eine Anhängersteckdose für Kraftfahrzeuge, mit den oberbegrifflichen Merkmalen nach Anspruch 1.

Anhängersteckdosen für Kraftfahrzeuge sind aus dem Stand der Technik gut bekannt, so z.B. aus der WO 2005/124943 A1 und der DE 43 01 506 A1, die jeweils eine gattungsgemäße Anhängersteckdose betreffen.

Anhängersteckdosen sind zumeist rückwärtig eines Kraftfahrzeuges ausgebildet bzw. an diesem angeordnet und dienen der Aufnahme eines Steckers eines mit dem Kraftfahrzeug zu koppelnden Anhängers und/oder Fahrradträgers. Dabei erfolgt über die Kopplung der Anhängersteckdose mit dem zugehörigen Stecker eine elektrische Verbindung zwischen dem Bordnetz des Kraftfahrzeuges einerseits und der elektrischen Anlage des Anhängers und/oder des Fahrradträgers andererseits. Typischerweise sind Anhängersteckdosen der eingangsgenannten Art kraftfahrzeugseitig in unmittelbarer Nähe zu einer Anhängerkupplung ausgebildet, so dass in einfacher Weise nicht nur eine mechanische, sondern auch eine elektrische Verbindung zwischen einem Anhänger und/oder einem Fahrradträger und einem Kraftfahrzeug ausgebildet werden kann.

Aus dem Stand der Technik sind zahlreiche Konstruktionen für Anhängersteckdosen für Kraftfahrzeuge bekannt geworden. So offenbart beispielsweise die Gebrauchsmusterschrift DE 1 830 469 eine Anhängersteckdose für Kraftfahrzeuge, die über ein Steckdosenteil verfügt, das unmittelbar auf einer Platte angeordnet ist. Diese Platte ist mit elektrisch voneinander isolierten Stromschienen ausgerüstet, die den Anschluss einzelner Kontakte an die den Stromschienen zugeordneten Stromkreise ermöglichen.

Der prinzipielle Nachteil dieser aus dem Stand der Technik bekannten Anhängersteckdose ist die konstruktiv bedingt aufwendige Montage. So findet die Bestückung der Anhängersteckdose mit den zugehörigen Kontakten typischer Weise erst nach einer Anordnung der Anhängersteckdose am Kraftfahrzeug statt, was das bestimmungsgemäße Einbringen der Kontakte in die Anhängersteckdose und deren Verbindung mit den zugehörigen Stromschienen sehr aufwendig macht.

Eine diesbezügliche Verbesserung hat die aus der Gebrauchsmusterschrift DE 75 17 705 bekannte Steckdose erbracht. Die hier beschriebene Steckdose verfügt über ein Gehäuse und einen Isolierkörper, wobei das Gehäuse und der Isolierkörper aus einer Kunststoffeinheit gebildet sein können. Der Isolierkörper dient der Aufnahme von Kontakten in Form von Stiften oder Buchsen und verfügt zu diesem Zweck über entsprechende Durchsteckbohrungen. Zum Zwecke einer vereinfachten Kontakteinbringung sind an der Anschlussseite des Isolierkörpers Schnapper angeformt, die jeweils in einen Einschnitt der Kontakte eingreifen. Darüber hinaus ist vorgesehen, dass die Durchsteckbohrungen von der Kontaktseite des Isolierkörpers her mit Sechskant-Einsenkungen ausgerüstet sind, die der Aufnahme eines entsprechenden, zu jedem Kontakt gehörenden sechskantförmigen Abschnittes dienen, was eine verdrehsichere Anordnung der Kontakte in den Durchsteckbohrungen gestattet. Obgleich diese Konstruktion bereits eine Montagevereinfachung gegenüber der Gebrauchsmusterschrift DE 1 830 469 erbringt, besteht nach wie vor Verbesserungsbedarf. So ist das Einfädeln der sechskantförmigen Abschnitte der Kontakte in die zugehörigen Sechskant-Einsenkungen der Durchsteckbohrungen vergleichsweise aufwendig. Und auch die anschlussseitig des Isolierkörpers vorgesehenen Schnapper haben sich als nachteilig herausgestellt. Zum einen deshalb, weil ihre bestimmungsgemäße Funktion nur mit speziell auf ihre Geometrie ausgelegten Kontakten gewährleistet ist. Zum anderen deshalb, weil sie zum Ausbrechen neigen, in welchem Fall das gesamte Gehäuse samt Isolierkörper nicht weiter brauchbar ist.

Um dem vorbeschrieben Problem zu begegnen und Steckdosen bereitzustellen, die einfacher montiert werden können, sind Konstruktionen vorgeschlagen worden, wonach die Anhängersteckdose über ein Steckdosengehäuse einerseits und einen hiervon aufgenommenen Kontaktträgereinsatz andererseits verfügt. Dabei ist der Kontaktträgereinsatz als gegenüber dem Steckdosengehäuse separates Bauteil ausgebildet, was es gestattet, den Kontaktträgereinsatz vorzukonfektionieren und mit den zugehörigen Steckkontakten zu bestücken. Ein an einem Kraftfahrzeug montiertes Steckdosengehäuse kann sodann in einfacher Weise mit einem gegebenenfalls schon herstellerseitig vorkonfektionierten Kontaktträgereinsatz bestückt werden. Der Montageaufwand wird anwenderseitig so auf ein Minimum reduziert.

Es sind aus dem Stand der Technik zahlreiche Konstruktionen bekannt geworden, die einen lösbar in einem Steckdosengehäuse anordbaren Kontaktträgereinsatz betreffen. Eine entsprechende Ausgestaltung ist beispielsweise aus der Gebrauchsmusterschrift DE 1 972 978 bekannt geworden. Diese Druckschrift offenbart eine Steckdose, die zur Kontaktstiftaufnahme über einen als Isolierstoffplatte bezeichneten Kontaktträgereinsatz verfügt. Um das ungewollte Eindringen von Feuchtigkeit und Schmutz in die Anhängersteckdose zu vermeiden, wird mit der Gebrauchsmusterschrift DE 1 972 978 im Übrigen vorgeschlagen, die Isolierstoffplatte unter Zwischenordnung einer entsprechenden Dichtung im Steckdosengehäuse anzuordnen.

Aus dem Stand der Technik sind ferner Konstruktionen bekannt geworden, wonach der Kontaktträgereinsatz zweiteilig ausgebildet ist und beispielsweise über ein Kontaktaufnahmeteil einerseits und einen Kontaktträger andererseits verfügt. Eine derartige Ausgestaltung ist beispielsweise aus der DE 38 41 006 bekannt geworden. Das Kontaktaufnahmeteil kann gemäß dieser Konstruktion einstückig mit dem Steckdosengehäuse ausgebildet sein. Der Kontaktträger ist indes lösbar mit dem Steckdosengehäuse bzw. dem Kontaktaufnahmeteil gekoppelt, vorzugsweise über eine Rastverbindung. In Entsprechung des schon vorerläuterten Vorteils kann der Kontaktträger dieser Konstruktion mit Steckkontakten vorkonfektioniert werden, gegebenenfalls herstellerseitig, so dass anwenderseitig eine einfache Montage insofern erreicht ist, als dass es für eine bestimmungsgemäße Ausrüstung der Anhängersteckdose gestattet ist, das an einem Kraftfahrzeug angeordnete Steckdosengehäuse mit einem vorkonfektionierten Kontaktträger bestücken zu können. Zur Abdichtung der Steckdose ist auch gemäß dieser Konstruktion eine innenseitig der Steckdose ausgebildete Dichtung vorgesehen.

Eine weitere Ausgestaltung ist aus der DE 197 36 629 bekannt geworden. Gemäß dieser Ausgestaltung kommt zur Anordnung des Kontaktträgereinsatzes innerhalb des Steckdosengehäuses ein Stützkörper zum Einsatz. Der Kontaktträgereinsatz wird unter Zwischenordnung dieses Stützkörpers im Steckdosengehäuse angeordnet. Dabei ist es der Sinn und Zweck eines solchen Stützkörpers, den lösbar vom Steckdosengehäuse aufgenommenen Kontaktträgereinsatz rückseitig gegenüber einer Montageplatte abstützen zu können. Der Stützkörper weist zu diesem Zweck entsprechende Stützbeine auf, die im montierten Zustand mit ihrem kontaktträgereinsatzentfernten Ende an der Montageplatte anliegen. Zur Abdichtung des Kontaktträgereinsatzes ist gemäß auch dieser Lösung eine Dichtung erforderlich.

Bei der aus der Gebrauchsmusterschrift DE 20 2005 001 567 bekannt gewordenen Konstruktion kann im Unterschied zur Lösung nach der DE 197 36 629 auf die Zwischenordnung eines Stützkörpers verzichtet werden. Dies wird gemäß der Lösung nach der Gebrauchsmusterschrift DE 20 2005 001 567 dadurch erreicht, dass zur Anordnung des Kontaktträgereinsatzes innerhalb des Steckdosengehäuses ein Bajonettverschluss zum Einsatz kommt. In besonderer Weise kann so der Kontaktträgereinsatz relativ gegenüber dem Steckdosengehäuse festgelegt werden, so dass zusätzliche Abstützungen des Kontaktträgereinsatzes relativ gegenüber einer rückwärtigen Montageplatte nicht mehr erforderlich sind. Für eine Abdichtung des Kontaktträgereinsatzes gegenüber dem Steckdosengehäuse kommt gemäß dieser Konstruktion eine ringförmige Dichtung zum Einsatz, die im Querschnitt U-förmig ausgestaltet ist und auf einer innen umlaufenden Rippe des Steckdosengehäuses aufgezogen ist.

Eine zur Gebrauchsmusterschrift DE 20 2005 001 567 vergleichbare Konstruktion ist aus der DE 43 01 506 bekannt geworden. Auch gemäß dieser Konstruktion kommt zur Anordnung des Kontaktträgereinsatzes innerhalb des Steckdosengehäuses ein Bajonettverschluss zum Einsatz. Dabei ist nach der DE 43 01 506 die Ausbildung eines Bajonettverschlusses bevorzugt, der über einen verdrehbar am Kontaktträgereinsatz angeordneten Ring verfügt. Einer möglichen Verdrillung der den Kontaktträgereinsatz verlassenden Anschlussleitungen beim Einbringen des Kontaktträgereinsatzes in das Steckdosengehäuse kann so entgegengewirkt werden. Zur Abdichtung des Kontaktträgereinsatzes gegenüber dem Steckdosengehäuse kommt im Unterschied zur Gebrauchsmusterschrift DE 20 2005 001 567 eine ringförmige Flachdichtung zum Einsatz, die einerseits am Kontaktträgereinsatz und andererseits am Steckdosengehäuse anliegt.

Aus dem Stand der Technik sind auch Konstruktionen bekannt geworden, wonach eine einstückige Ausgestaltung von Steckdosengehäuse und davon aufgenommenem Kontaktträgereinsatz vorgesehen ist, so z.B. aus der EP 1 267 453 A1 und der. DE 19 51 185 U.

Obgleich sich die vorbeschriebenen Konstruktionen im alltäglichen Praxiseinsatz bewährt haben, besteht Verbesserungsbedarf. Es ist insbesondere angestrebt, die Funktionssicherheit einer Anhängersteckdose zu verbessern.

Es ist deshalb die Aufgabe der Erfindung, insbesondere ausgehend von der eine gattungsgemäße Anhängersteckdose betreffenden DE 43 01 506 eine Konstruktion für eine Anhängersteckdose vorzuschlagen, die eine Vereinfachung darstellt und für eine erhöhte Funktionssicherheit der Anhängersteckdose sorgt.

Zur Lösung dieser Aufgabe wird mit der Erfindung eine Anhängersteckdose nach Anspruch 1 vorgeschlagen.

Die erfindungsgemäße Ausgestaltung zeichnet sich unter anderem dadurch aus, dass das Steckdosengehäuse und der davon aufgenommene Kontaktträgereinsatz einstückig ausgebildet sind, d. h. das Steckdosengehäuse und der Kontaktträgereinsatz eine gemeinsame Baueinheit ausbilden. Mit der erfindungsgemäßen Ausgestaltung wird damit im Unterschied zum vorbeschriebenen Stand der Technik z.B. nach der WO 2005/124943 A1 oder der DE 43 01 506 A1 bewusst der Nachteil in Kauf genommen, den Kontaktträgereinsatz im Bedarfsfall zum Zwecke der Vorkonfektionierung nicht vom Steckdosengehäuse trennen bzw. nicht lösbar am Steckdosengehäuse anordnen zu können. Damit wird ein im Unterschied zum Stand der Technik völlig anderer Lösungsweg beschritten und das in der Fachwelt vorherrschende Vorurteil überwunden, den Kontaktträgereinsatz zum Zwecke einer vereinfachten Montage als gegenüber dem Steckdosengehäuse separates Bauteil ausbilden zu müssen. Gegenteiliges ist vielmehr der Fall, wie dies die mit der erfindungsgemäßen Ausgestaltung erreichten Vorteile zeigen.

Die gegenüber dem Steckdosengehäuse separate Ausgestaltung des Kontaktträgereinsatzes gemäß dem Stand der Technik macht die Verwendung einer Dichtung erforderlich, die den Kontaktträgereinsatz gegenüber dem Steckdosengehäuse abdichtet. Typischerweise kommen zu diesem Zweck Ringdichtungen zum Einsatz, die in das Steckdosengehäuse zum Zwecke der Abdichtung eingesetzt sind. Gemäß der erfindungsgemäßen Ausgestaltung kann auf eine solche Dichtung vollständig verzichtet werden, da die einstückige Ausgestaltung von Steckdosengehäuse einerseits und Kontaktträgereinsatz andererseits die nach dem Stand der Technik bestehende Abdichtungsproblematik vollends überwindet. Dabei ist in diesem Zusammenhang ferner von Vorteil, dass eine Montagevereinfachung gegenüber dem Stand der Technik erreicht ist, denn der Montageschritt zur bestimmungsgemäßen Anordnung einer Dichtung im Steckdosengehäuse und/oder am Kontaktträgereinsatz kann ersatzlos entfallen.

Die erfindungsgemäße Anhängersteckdose wird in Übereinstimmung mit den Ausführungsformen nach dem Stand der Technik bevorzugterweise deckelseitig sowie rückseitig abgedichtet. Dies kann wie aus dem Stand der Technik bekannt durch entsprechende Dichtmittel erfolgen. Auf die aus dem Stand der Technik bekannte dritte Dichtung, nämlich die Dichtung zwischen Kontaktträgereinsatz einerseits und Steckdosengehäuse andererseits kann jedoch in vorteilhafter Weise, wie vorstehend beschrieben, verzichtet werden.

Die erfindungsgemäße Ausgestaltung erweist sich auch insofern als vorteilhaft, als dass aufgrund der einstückigen Ausgestaltung von Steckdosengehäuse einerseits und Kontaktträgereinsatz andererseits eine Abstützung des Kontaktträgereinsatzes ohne weitere Hilfsmittel erreicht ist. Auf Stützkörper, Rasteinrichtungen und/oder dergleichen, wie sie bei Konstruktionen gemäß dem Stand der Technik erforderlich sind, kann in vollem Umfang verzichtet werden. Zum einen kann hierdurch eine Montagevereinfachung erreicht werden. Zum anderen wird durch die erzielte Bauteilreduzierung die Gefahr minimiert, dass es zu Defekten in Folge einer unter Umständen unsachgemäßen Handhabung an Bauteilen der Anhängersteckdose kommt. Im Unterschied zum vorbekannten Stand der Technik erweist sich die erfindungsgemäße Anhängersteckdose damit insgesamt als äußerst robust und auch beständiger gegenüber mechanischen Kraftbeaufschlagungen, sei es im bestimmungsgemäßen Verwendungsfall oder im Rahmen einer Montage bzw. Demontage.

Die Anhängersteckdose stützt sich im bestimmungsgemäßen Verwendungsfall an einer rückwärtig angeordneten Montageplatte des Kraftfahrzeuges ab. Bei der Einführung eines Steckers in die Anhängersteckdose wird der Kontaktträgereinsatz in Richtung auf diese Montageplatte kraftbeaufschlagt. Aus diesem Grunde sehen aus dem Stand der Technik vorbekannte Konstruktionen vor, dass eine Abstützung des Kontaktträgereinsatzes gegenüber der Montageplatte stattfindet, zu welchem Zweck typischerweise Stützkörper, am Kontaktträgereinsatz angeordnete Abstützbeine und/oder Rasteinrichtungen zum Einsatz kommen, die eine Verrastung von Kontaktträgereinsatz einerseits und Steckdosengehäuse andererseits ermöglichen. Auf derlei Einrichtungen kann gemäß der erfindungsgemäßen Ausgestaltung vollends verzichtet werden. Dank der einstückigen Ausgestaltung von Kontaktträgereinsatz einerseits und Steckdosengehäuse andererseits wird im bestimmungsgemäßen Einsteckfall die über den Kontaktträgereinsatz eingeleitete Einsteckkraft über das Steckdosengehäuse in die rückwärtig der Anhängersteckdose ausgebildete Montageplatte abgeleitet. Damit erweist sich die erfindungsgemäß ausgestaltete Anhängersteckdose als äußerst robust und verwendungssicher.

Der Kontaktträgereinsatz und das Steckdosengehäuse sind erfindungsgemäß über ein gemeinsames Ringteil miteinander verbunden. Dieses Ringteil geht vom Kontaktträgereinsatz aus und mündet innenwandseitig im Steckdosengehäuse. Es ist bevorzugterweise rechtwinklig zur Innenwand des Steckdosengehäuses ausgerichtet. Der Kontaktträgereinsatz einerseits und das Steckdosengehäuse andererseits bilden einen Ringraum zwischen sich aus, der im bestimmungsgemäßen Verwendungsfall der Aufnahme eines Steckers dient. Dieser Ringraum ist bodenseitig durch das das Steckdosengehäuse mit dem Kontaktträgereinsatz verbindende Ringteil abgeschlossen.

Das Ringteil trägt erfindungsgemäß ein Federelement. Typischerweise wird ein in die Anhängersteckdose in bestimmungsgemäßer Weise eingeführter Stecker über einen Bajonettverschluss lösbar mit dem Steckdosengehäuse gekoppelt. Das vom Ringteil getragene Federelement dient in diesem Zusammenhang der Sicherung des Bajonettverschlusses in Verschlussstellung, indem das Federelement bestrebt ist, einen in das Steckdosengehäuse eingeführten Stecker auf Vorspannung in Verschlussstellung zu halten. Selbst bei Erschütterungen wird so ein unbeabsichtigtes Lösen des Bajonettverschlusses verhindert.

Das Federelement kann als separates Bauteil ausgebildet sein, das im Montagefall auf das Ringteil der Anhängersteckdose aufzulegen ist. Alternativ kann aber auch vorgesehen sein, dass das Federelement unverlierbar mit dem Ringteil verbunden ist, beispielsweise mit diesem verschraubt, vernietet, verklebt oder sonst wie verbunden ist.

Es ist gemäß einem besonderen Merkmal der Erfindung vorgesehen, das Federelement als Ringdichtung auszugestalten, d. h. als Federelement ein aus elastischem Gummimaterial bestehendes Dichtelement zu verwenden. Dabei dient die zum Einsatz kommende Dichtung nicht dem originären Zweck der Abdichtung, sondern lediglich als Federelement aufgrund der vom Gummimaterial bereitgestellten elastischen Federungseigenschaften. Dabei eignet sich die Verwendung einer Ringdichtung als Federelement insbesondere deshalb, weil es sich bei einer Ringdichtung um ein standardisiertes und vor allem preisgünstiges Bauelement handelt, das in einfacher Weise beschafft und in bestimmungsgemäßer Weise montiert werden kann.

Die Verwendung einer Ringdichtung als Federelement hat zudem den Vorteil, dass bei eingestecktem Stecker eine Abdichtung des Steckers gegenüber dem Steckdosengehäuse erreicht ist. Für die Ausgestaltung der erfindungsgemäßen Anhängersteckdose ist eine solche Abdichtung aber nicht erforderlich. Zur Abdichtung des Steckers gegenüber dem Steckdosengehäuse kann auch eine steckerseitige Dichtung vorgesehen sein. Die Ausgestaltung des Federelements als Ringdichtung hat aber den Vorteil, dass hierdurch zwei Funktionen gleichsam erreicht werden können, nämlich zum einen die federelastische Beaufschlagung des Steckers in Verschlussstellung sowie zum anderen die Abdichtung des Steckers gegenüber dem Steckdosengehäuse.

Mit der erfindungsgemäßen Steckdose wird insgesamt eine Konstruktion vorgeschlagen, die gegenüber dem Stand der Technik eine erhöhte Funktionssicherheit erbringt. Es sind insbesondere die Abdichtungsproblematik sowie die Problematik bezüglich der rückwärtigen Abstützung des Kontaktträgereinsatzes gegenüber einer Montageplatte vollständig eliminiert. Darüber hinaus ist eine vereinfachte Montage erreicht, da es nunmehr nicht mehr erforderlich ist, den Kontaktträgereinsatz und die dazugehörige Dichtung im Steckdosengehäuse der Anhängersteckdose montieren zu müssen.

Die Aufnahmekanäle des Kontaktträgereinsatzes verfügen jeweils innenseitig über einen umlaufenden Vorsprung. Dieser verfügt zur Positionierung eines Steckkontaktes über eine Rückhaltefläche einerseits sowie über eine davon axial beabstandet ausgebildete Anschlagfläche andererseits. Im bestimmungsgemäßen Verwendungsfall wirken die Rückhaltefläche sowie die Anschlagfläche mit dem Steckkontakt zusammen, der seinerseits über Rastbeine einerseits sowie axial davon beabstandete Anschlagnocken andererseits trägt.

Im Montagefall wird ein Steckkontakt in einen zugehörigen Aufnahmekanal des Kontaktträgereinsatzes eingeschoben, und zwar soweit, bis die Anschlagnocken des Steckkontaktes an der Anschlagfläche des innenseitig im Aufnahmekanal ausgebildeten Vorsprungs anschlagen. Ein Hindurchführen des Steckkontaktes durch den Aufnahmekanal hindurch ist so unterbunden, was eine montageseitige Fehlbedienung ausschließt. Mit Erreichen der Anschlagposition hintergreifen die vorzugsweise federelastisch ausgebildeten Rastbeine des Steckkontaktes den innenseitig im Aufnahmekanal ausgebildeten Vorsprung und stützen sich an der von dem Vorsprung bereitgestellten Anschlagfläche ab, so dass ein Herausdrücken des Steckkontaktes aus dem Aufnahmekanal bei einer bestimmungsgemäßen Einführung eines Steckers in die Anhängersteckdose sicher unterbunden ist.

Eine Montage der erfindungsgemäßen Anhängersteckdose kann grundsätzlich auf zwei unterschiedliche Weisen erfolgen. Gemäß einer ersten Alternative wird das Steckdosengehäuse samt einstückig damit ausgebildetem Kontaktträgereinsatz in bestimmungsgemäßer Weise an einer Montageplatte eines Kraftfahrzeuges angeordnet. Alsdann werden die Steckkontakte in die von dem Kontaktträgereinsatz bereitgestellten Aufnahmekanäle eingeführt und dort in bestimmungsgemäßer Weise festgelegt, indem ein Einführen der Steckkontakte bis in die Anschlagposition erfolgt. Gemäß einer Alternative kann auch eine Vormontage durch Vorkonfektionierung erfolgen, indem die Steckkontakte vor einer Anordnung der Anhängersteckdose an einer Montageplatte in die zugehörigen Aufnahmekanäle des Kontaktträgereinsatzes eingesteckt werden. Dies kann im Rahmen einer Vorkonfektionierung auch herstellerseitig durchgeführt werden. Am Einbauort selbst hat dann nur noch eine bestimmungsgemäße Anordnung der Anhängersteckdose zu erfolgen, vorzugsweise an einer aus dem Stand der Technik bekannten Montageplatte, beispielsweise in der Ausgestaltung eines Montageblechs.

Es ist erfindungsgemäß vorgesehen, dass das Steckdosengehäuse eine seitliche Aussparung für die seitliche Wegführung der Anschlussleitungen aufweist. Dabei ist vorgesehen, dass der Kontaktträgereinsatz unter Ausbildung eines Volumenraums für die rückwärtige Wegführung der Anschlussleitungen im Abstand zur rückwärtigen Randkante des Steckdosengehäuses ausgebildet ist. Dieser zwischen der rückwärtigen Randkante des Steckdosengehäuses einerseits und der rückwärtigen Fläche des Kontaktträgereinsatz andererseits ausgebildete Volumenraum dient der Umlenkung der Anschlussleitungen ausgehend vom Kontaktträgereinsatz in Richtung der im Steckdosengehäuse ausgebildeten seitlichen Aussparung. Alternativ zu einer seitlichen Abführung kann auch eine rückwärtige Abführung der Anschlussleitungen vorgesehen sein, in welchem Fall die Anschlussleitungen ausgehend vom Kontaktträgereinsatz ohne Ablenkung weggeführt und beispielsweise durch eine im Montageblech vorgesehene Ausnehmung geführt sind.

Gemäß einem weiteren Merkmal der Erfindung ist vorgesehen, dass die Aufnahmekanäle der rückwärtigen Randkante des Steckdosengehäuses zugewandt einen im Durchmesser erweiterten Endbereich aufweisen. Diese Endbereiche dienen der Aufnahme von Dichtelementen, d. h. die Aufnahmekanäle können rückwärtig durch Aufnahme entsprechender Dichteinrichtungen abgedichtet werden. Dabei ist je Aufnahmekanal ein Dichtelement vorzusehen. In einer alternativen Ausgestaltung kann eine sämtliche Aufnahmekanäle gemeinschaftlich abdeckende Dichttülle eingesetzt werden, die im bestimmungsgemäßen Verwendungsfall zwischen der rückwärtigen Randkante der Steckdose einerseits und einem die Steckdose haltenden Montageblech andererseits angeordnet ist.

Der Kontaktträgereinsatz ist als 7-poliger oder als 13-poliger Kontaktträgereinsatz ausgebildet und verfügt dementsprechend über 7 oder 13 Aufnahmekanäle. Gemäß einer alternativen Ausgestaltung der Erfindung können aber auch mehr Aufnahmekanäle vorgesehen sein, d. h. anstatt von 7 Aufnahmekanälen sind 8 Aufnahmekanäle bzw. anstelle von 13 Aufnahmekanälen sind 14 Aufnahmekanäle vorgesehen. Diese Ausgestaltung ist mit der erfindungsgemäßen Anhängersteckdose deshalb möglich, weil es hinsichtlich des Kontaktträgereinsatzes einer Führungsnut für eine Ausrichtungscodierung des Kontaktträgereinsatzes relativ gegenüber dem Steckdosengehäuse nicht bedarf. Insofern bietet der Kontaktträgereinsatz mehr Raum für die Ausgestaltung auch weiterer Aufnahmekanäle, was bei aus dem Stand der Technik bekannten Kontaktträgereinsätzen nicht möglich ist, zumindest nicht bei gleichbleibend großen Aufnahmekanälen bzw. Steckkontakten.

Es ist ferner vorgesehen ein Anschlusssystem für Kraftfahrzeuge mit einer Anhängersteckdose der erfindungsgemäßen Art und einer Mehrzahl von Steckkontakten zur Anordnung in der Anhängersteckdose. Bevorzugterweise sind dabei das Steckdosengehäuse und der Kontaktträgereinsatz in Monosandwichbauweise ausgestaltet.

Alternativ zur Ausgestaltung einer Anschlagfläche am Vorsprung eines Aufnahmekanals kann auch vorgesehen sein, je Aufnahmekanal steckereingangsseitig einen umlaufenden Ring, d. h. einen den lichten Durchmesser des Aufnahmekanals reduzierenden Ring vorzusehen, gegen den der zugehörige Steckkontakt mit seiner steckerseitigen Randkante nach einem bestimmungsgemäßen Einführen in den Aufnahmekanal anschlägt. Durch eine solche Ausgestaltung wird gleichfalls sichergestellt, dass der Steckkontakt im Rahmen einer Montage nicht zu weit in den zugehörigen Aufnahmekanal eingeführt bzw. durch diesen sogar hindurchgeführt wird. Für eine rückwärtige Abstützung des Steckkontaktes dient auch gemäß dieser Ausführungsform eine am Steckkontakt ausgebildete Rückhalteeinrichtung, die beispielsweise durch Rastbeine in der schon vorbeschriebenen Ausgestaltung gebildet sein kann. In Zusammenwirkung mit derartigen Rastbeinen trägt der innenseitig im Aufnahmekanal umlaufende Vorsprung eine entsprechende Rückhaltefläche.

Weitere Merkmale und Vorteile der Erfindung ergeben sich aus der nachfolgenden Beschreibung anhand der Figuren. Dabei zeigen:
- Fig. 1: schematisch in geschnittener Seitenansicht eine Anhängersteckdose nach der Erfindung;
- Fig. 2: schematisch in geschnittener Seitenansicht einen Kontaktträgereinsatz einer erfindungsgemäßen Anhängersteckdose und
- Fig. 3: in schematischer Seitenansicht ein Steckkontakt.

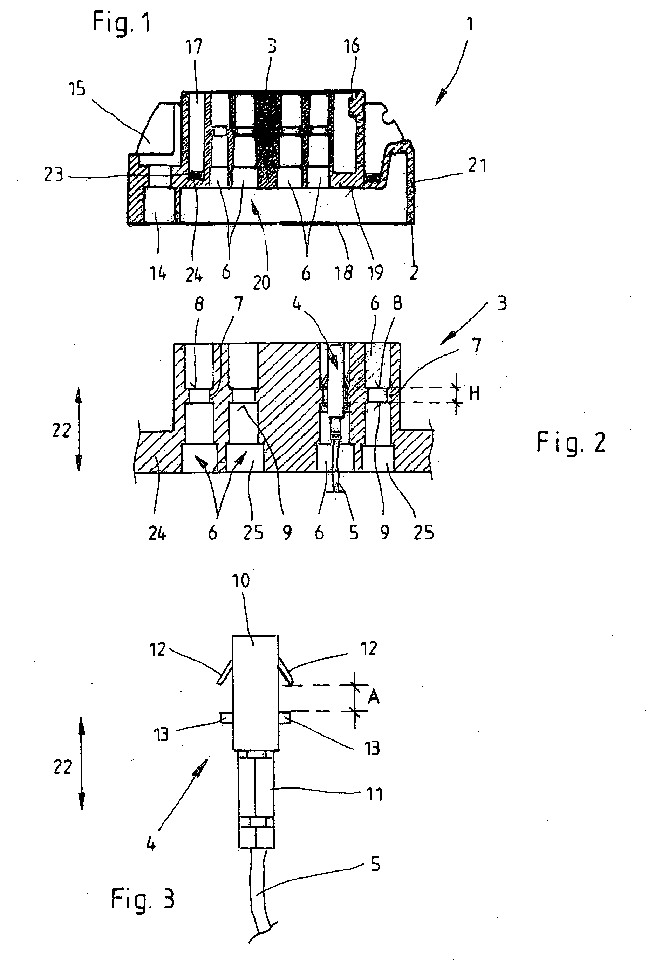

Fig. 1 lässt in schematischer Darstellung in geschnittener Ansicht eine Anhängersteckdose 1 für Kraftfahrzeuge nach der Erfindung erkennen. Die Anhängersteckdose 1 verfügt über ein Steckdosengehäuse 2 und einen vom Steckdosengehäuse 2 aufgenommenen Kontaktträgereinsatz 3, wobei das Steckdosengehäuse 2 und der Kontaktträgereinsatz 3 einstückig ausgebildet sind, vorzugsweise als Spritzgussteil aus Kunststoff.

Die Anhängersteckdose 1 verfügt des Weiteren über einen in den Figuren nicht dargestellten Deckel. Dieser ist verschwenkbar am Befestigungsabschnitt 15 des Steckdosengehäuses 2 angeordnet, und zwar bevorzugterweise unter Federvorspannung derart, dass dieser dazu neigt, sich in Verschlussstellung an das Steckdosengehäuse 2 anzulegen. Im bestimmungsgemäßen Verwendungsfall ist der Deckel entgegen dieser auf ihn einwirkenden Federkraft zu verschwenken, so dass ein in den Figuren ebenfalls nicht dargestellter Stecker in das Steckdosengehäuse 2 eingeführt werden kann.

Der Kontraktträgereinsatz 3 ist unter Belassung eines Ringraums 17 vom Steckdosengehäuse 2 aufgenommen. Bodenseitig dieses Ringraumes 17 ist ein Ringteil 24 vorgesehen, über welches der Kontaktträgereinsatz 3 und das Steckdosengehäuse 2 einstückig miteinander verbunden sind. Im bestimmungsgemäßen Verwendungsfall dient der Ringraum 17 der Aufnahme eines in das Steckdosengehäuse 2 einzuführenden Steckers, wobei für eine sichere Anordnung des Steckers im Steckdosengehäuse 2 ein Bajonettverschluss vorgesehen ist, zu welchem Zweck das Steckdosengehäuse 2 innenseitig Nocken 16 trägt, von denen in der Darstellung nach Fig. 1 einer zu erkennen ist. Im bestimmungsgemäßen Verwendungsfall wirken diese Nocken 16 mit am Stecker ausgebildeten Bajonettführungen in an sich bekannter Weise zusammen.

Der Kontaktträgereinsatz 3 stellt eine Mehrzahl von Aufnahmekanälen 6 bereit. In diese Aufnahmekanäle 6 sind im bestimmungsgemäßen Verwendungsfall Steckkontakte 4 eingesetzt, und zwar in jedem Aufnahmekanal 6 ein Steckkontakt 4, wie dies anhand eines Aufnahmekanals 6 beispielhaft aus Fig. 2 zu entnehmen ist. Dabei ist ein jeder Steckkontakt 4 an eine Anschlussleitung 5 angeschlossen.

Ein jeder Aufnahmekanal 6 verfügt über einen innenseitig umlaufenden Vorsprung 7. Dieser stellt eine Rückhaltefläche 8 einerseits sowie eine davon axial beabstandet ausgebildete Anschlagfläche 9 andererseits bereit, wie dies insbesondere die Darstellung nach Fig. 2 erkennen lässt.

Ein jeder Steckkontakt 4 verfügt über einen Kontaktkörper 10. Dieser Kontaktkörper 10 ist als Hülsenteil ausgebildet und wirkt im Verwendungsfall mit einem entsprechend ausgebildeten Steckkontakt eines Steckers zusammen. An den Kontaktkörper 10 schließt sich ein Anschlussteil 11 an. Dieses Anschlussteil 11 dient der elektrischen Verbindung des Steckkontaktes 4 mit einer Anschlussleitung 5. Das Anschlussteil 11 kann beispielsweise als Crimp-Anschluss ausgebildet sein.

Der Kontaktkörper 10 verfügt über radial nach außen abstehende Rastbeine 12, die vorzugsweise federelastisch ausgebildet sind. In axialer Richtung hiervon beabstandet sind Anschlussnocken 13 vorgesehen, die ebenfalls vom Kontaktkörper 10 des Steckkontaktes 4 getragen sind.

Der axiale Abstand A zwischen den Anschlagnocken 13 und den Rastbeinen 12 entspricht der Höhe H eines Vorsprungs 7 in Höhenrichtung 22, wie sich insbesondere aus der Darstellung nach Fig. 2 ergibt.

Im endfertig montierten Zustand sind die Steckkontakte 4 in die jeweiligen Aufnahmekanäle 6 des Kontaktträgereinsatzes 3 eingeführt. Dabei wird ein Steckkontakt 4 von der rückwärtigen Randkante 18 des Steckdosengehäuses 2 ausgehend mit seinem Kontaktkörper 10 voran in den zugehörigen Aufnahmekanal 6 eingeführt, und zwar derart weit, dass die am Kontaktkörper 10 angeordneten Anschlagnocken 13 an die zugehörige Anschlagfläche 9 des zugehörigen Vorsprungs 7 anschlagen. In diese Anschlagsituation können die Rastbeine 12 des Kontaktkörpers 10 radial frei ausfedern und so den Vorsprung 7 vorderseits hintergreifen und sich an der von dem Vorsprung 7 bereitgestellten Rückhaltefläche 8 abstützen. Dieser Sachzusammenhang ergibt sich insbesondere aus der Darstellung nach Fig. 2.

In der nach Fig. 2 beispielhaft dargestellten Stellung eines Steckkontaktes 4 ist dieser positionssicher gegenüber dem Steckdosengehäuse 2 gelagert. Aufgrund des Anschlages der Anschlagnocken 13 am Vorsprung 7 ist ein Durchdrücken des Steckkontaktes 4 in Richtung der deckelseitigen Öffnung des Steckdosengehäuses 2 unterbunden. Auch ein rückwärtiges Herausdrücken des Steckkontaktes 4 ist nicht möglich, da sich dessen Rastbeine 12 an der vom Vorsprung 7 bereitgestellten Rückhaltefläche 8 abstützen. Insgesamt ist so eine lagesichere Anordnung des Steckkontaktes 4 in dem zugehörigen Aufnahmekanal 6 erreicht. Für eine Demontage des Steckkontaktes 4 können die Rastbeine 12 aufgrund ihrer federelastischen Ausgestaltung radial nach innen in Richtung auf den Kontaktkörper 10 des jeweiligen Steckkontaktes 4 verbogen werden, was dann eine rückwärtige Herausführung des Steckkontaktes 4 aus dem jeweiligen Aufnahmekanal 6 ermöglicht. Die radial nach innen gerichtete Einfederung der Rastbeine 12 kann durch ein entsprechendes Hülsenwerkzeug erreicht werden, das deckelöffnungsseitig in den jeweiligen Aufnahmekanal 6 des Kontaktträgereinsatzes 3 einzuführen ist.

Zur Anordnung des Steckdosengehäuses 2 auf beispielsweise einem Montageblech verfügt das Steckdosengehäuse 2 in an sich bekannter Weise über Schraubkanäle 14, durch die hindurch entsprechend ausgestaltete Schrauben geführt werden können.

Für eine seitliche Abführung der Anschlussleitungen 5 kann in der Gehäusewand 21 des Steckdosengehäuses 2 eine entsprechende Ausnehmung vorgesehen sein. Zur Umlenkung der rückwärtig aus dem Kontaktträgereinsatz 3 hinausgeführten Anschlussleitungen 5 in Richtung auf die seitliche Ausnehmung in der Gehäusewand 21 ist ein Volumenraum 20 vorgesehen, der sich zwischen der rückwärtigen Fläche 19 des Kontraktträgereinsatzes 3 einerseits und der rückwärtigen Randkante 18 des Steckdosengehäuses 2 andererseits erstreckt.

Das Ringteil 24 ist, wie die Darstellung nach Fig. 1 erkennen lässt, oberseitig mit einem Federelement 23 belegt sein. Dieses Federelement 23 dient der Sicherung des Bajonettverschlusses zwischen nicht gezeigtem Stecker einerseits und Steckdosengehäuse 2 andererseits, indem der Bajonettverschluss entgegen der Wirkung des Federelements 23 wirkt und so in seiner vorgesehenen Raststellung gehalten wird. Bei dem Federelement 23 kann es sich beispielsweise um einen gummielastischen Ring handeln, der auch als Dichtelement zwischen Stecker und Steckdosengehäuse wirkt. Ein solcher Dichtring kann entgegen der Darstellung nach Fig. 1 auch steckerseitig ausgebildet sein.

Für eine rückwärtige Abdichtung der Aufnahmekanäle kann eine sämtliche Aufnahmekanäle abdeckende Abdichttülle vorgesehen sein, die beispielsweise zwischen Montageblech einerseits und Steckdosengehäuse 2 andererseits angeordnet sein kann. Alternativ zu dieser Ausgestaltung kann auch je Aufnahmekanal 6 ein in den Figuren nicht dargestelltes Dichtelement vorgesehen sein. Zur Anordnung eines solchen Dichtelements in einem Aufnahmekanal 6 ist der Aufnahmekanal 6 rückwärtig mit einem im Durchmesser erweiterten Endbereich 25 ausgestaltet, wie insbesondere die Darstellung nach Fig. 2 erkennen lässt.

Die erfindungsgemäße Ausgestaltung zeichnet sich durch die Einstückigkeit von Steckdosengehäuse 2 und Kontaktträgereinsatz 3 aus. Diese Ausgestaltung erweist sich insbesondere deshalb als vorteilhaft, weil es einer Abdichtung des Kontaktträgereinsatzes 3 gegenüber dem Steckdosengehäuse nicht bedarf und im Übrigen auch Stützkörper für den Kontaktträgereinsatz 3 zur Abstützung desselben gegenüber einer rückwärtigen Montageplatte nicht erforderlich sind. Darüber hinaus vereinfacht sich die Montage der Anhängersteckdose 1, da weniger Bauteile vor Ort montiert werden müssen.

### Bezugszeichenliste

- 1: Anhängerdose
- 2: Steckdosengehäuse
- 3: Kontaktträgereinsatz
- 4: Steckkontakt
- 5: Anschlussleitung
- 6: Aufnahmekanal
- 7: Vorsprung
- 8: Rückhaltefläche
- 9: Anschlussfläche
- 10: Kontaktkörper
- 11: Anschlussteil
- 12: Rastbein
- 13: Anschlagnocken
- 14: Schraubkanal
- 15: Befestigungsabschnitt
- 16: Nocken
- 17: Ringraum
- 18: Randkante
- 19: rückwärtige Fläche
- 20: Volumenraum
- 21: Gehäusewand
- 22: Höhenrichtung
- 23: Federelement
- 24: Ringteil
- 25: Endbereich

## Patentansprüche

1. Anhängersteckdose für Kraftfahrzeuge, mit einem Steckdosengehäuse (2) und einem hiervon aufgenommenen Kontaktträgereinsatz (3), der für die Aufnahme von mit elektrischen Anschlussleitungen (5) versehenen elektrischen Steckkontakten (4) je Steckkontakt (4) einen Aufnahmekanal (6) aufweist, wobei die Aufnahmekanäle (6) jeweils einen innenseitig umlaufenden Vorsprung (7) aufweisen, der zur Positionierung eines Steckkontaktes (4) im jeweiligen Aufnahmekanal (6) eine Rückhaltefläche (8) einerseits sowie eine davon axial beabstandet ausgebildete Anschlagfläche (9) andererseits aufweist, **dadurch gekennzeichnet, dass** das Steckdosengehäuse (2) und der Kontaktträgereinsatz (3) einstückig als. Spritzgussteil aus Kunststoff ausgebildet sind, wobei der Kontaktträgereinsatz (3) und das Steckdosengehäuse (2) über ein gemeinsames Ringteil (24) miteinander verbunden sind und wobei das Ringteil (24) ein Federelement (23) trägt und dass die rückwärtigen Flächen des Kontaktträgereinsatzes (3) und des Ringteils (24) bündig abschließen, wobei zur Umlenkung von rückwärtig aus dem Kontaktträgereinsatz (3) hinausgeführten Anschlussleitungen (5) in Richtung auf eine seitliche Ausnehmung in der Gehäusewand (21) des Steckdosengehäuses (2) ein Volumenraum (20) vorgesehen ist, der sich zwischen der rückwärtigen Fläche (19) des Kontaktträgereinsatzes (3) einerseits und der rückwärtigen Randkante (18) des Steckdosengehäuses (2) andererseits erstreckt.

2. Anhängersteckdose nach Anspruch 1, **dadurch gekennzeichnet, dass** das Federelement (23) eine Ringdichtung ist.

3. Anhängersteckdose nach Anspruch 1 oder 2, **dadurch gekennzeichnet, dass** die Aufnahmekanäle (6) der rückwärtigen Randkante (18) des Steckdosengehäuses (2) zugewandt einen im Durchmesser erweiterten Endbereich (25) aufweisen.

4. Anhängersteckdose nach Anspruch 3, **dadurch gekennzeichnet, dass** in die erweiterten Endbereiche (25) Dichtelemente eingesetzt sind.

5. Anhängersteckdose nach einem der vorhergehenden Ansprüche, **dadurch gekennzeichnet, dass** der Kontaktträgereinsatz (3) 7 oder 13 Aufnahmekanäle (6) aufweist.

6. Anschlusssystem für Kraftfahrzeuge, mit einer Anhängersteckdose (1) nach einem der vorhergehenden Ansprüche 1 bis 5 und einer Mehrzahl von Steckkontakten (4) zur Anordnung in der Anhängersteckdose (1).

7. System nach Anspruch 6, **dadurch gekennzeichnet, dass** die Steckkontakte (4) einen Kontaktkörper (10) aufweisen, der Rastbeine (12) und axial davon beabstandet Anschlagnocken (13) trägt.

8. System nach Anspruch 7, **dadurch gekennzeichnet, dass** der axiale Abstand zwischen den Rastbeinen (12) und den Anschlagnocken (13) eines Steckkontaktes (4) der Höhe des Vorsprungs (7) im zugehörigen Aufnahmekanal (6) entspricht.

9. System nach Anspruch 6, **dadurch gekennzeichnet, dass** das Federelement (23) eine Ringdichtung ist.

## Claims

1. A trailer socket for motor vehicles comprising a socket housing (2) and a contact carrier insert (3) received therein which comprises, for receiving electric plug-in contacts (4) provided with electric connection lines (5), a reception channel (6) for each plug-in contact (4), wherein the reception channels (6) respectively comprise an inside circumferential projection (7) which comprises a retaining surface (8) for positioning a plug-in contact (4) in the respective reception channel (6), on the one hand, and a stop surface (9) which is axially spaced from the retaining surface, on the other hand, **characterized in that** the socket housing (2) and the contact carrier insert (3) are made in one piece as injection-moulded part made of plastic, wherein the contact carrier insert (3) and the socket housing (2) are connected to each other via a common ring part (24) and wherein the ring part (24) carries a spring element (23) and that the rear surfaces of the contact carrier insert (3) and the ring part (24) are flush with each other, wherein a volume space (20) is provided for redirecting connection lines (5) which are let out from the rear side of the contact carrier insert (3) into the direction of a lateral recess in the housing wall (21) of the socket housing (2), which volume space extends between the rear surface (19) of the contact carrier insert (3), on the one hand, and the rear edge (18) of the socket housing (2), on the other hand.

2. A trailer socket according to claim 1, **characterized in that** the spring element (23) is a ring gasket.

3. A trailer socket according to claim 1 or 2, **characterized in that** the reception channels (6) comprise end regions (25) having an enlarged diameter and facing the rear edge (18) of the socket housing (2).

4. A trailer socket according to claim 3, **characterized in that** sealing elements are inserted into the enlarged end regions (25).

5. A trailer socket according to one of the preceding claims, **characterized in that** the contact carrier insert (3) comprises 7 or 13 reception channels (6).

6. A connection system for motor vehicles, comprising a trailer socket (1) according to one of the preceding claims 1 through 5 and a plurality of plug-in contacts (4) for being placed in the trailer socket (1).

7. A system according to claim 6, **characterized in that** the plug-in contacts (4) comprise a contact body (10) which carries snap-in legs (12) and stop cams (13) which are axially spaced from the snap-in legs.

8. A system according to claim 7, **characterized in that** the axial distance between the snap-in legs (12) and the stop cams (13) of a plug-in contact (4) corresponds to the height of the projection (7) in the associated reception channel (6).

9. A system according to claim 6, **characterized in that** the spring element (23) is a ring gasket.

## Revendications

1. Prise de remorque pour des véhicules automobiles, comprenant un boîtier de prise (2) et un insert porte-contacts (3) reçu par celui-ci, lequel comprend, pour recevoir des contacts à fiches munis des lignes de connexion électriques (5), un canal de réception (6) pour chaque contact à fiches (4), les canaux de réception (6) comprenant chacun une saillie (7) qui s'étend sur la circonférence intérieure et qui comprend une surface de retenue (8) pour positionner un contact à fiches (4) dans le canal de réception (6) respectif, d'une part, et une surface de butée (9) axialement espacée de la surface de retenue, d'autre part, **caractérisé en ce que** le boîtier de prise (2) et l'insert porte-contacts (3) sont formés d'un seul tenant comme pièce moulée par injection en plastique, l'insert porte-contacts (3) et le boîtier de prise (2) étant reliés l'un à l'autre par moyen d'une partie annulaire commune (24) et la partie annulaire (24) portant un élément de ressort (23) et que les surfaces arrière de l'insert porte-contacts (3) et de la partie annulaire (24) sont affleurées, un espace de volume (20) étant prévu pour rediriger des lignes de connexion (5) sorties du côté arrière de l'insert porte-contacts (3) dans la direction d'un évidement latéral dans la paroi de boîtier (21) du boîtier de prise (2), l'espace de volume s'étendant entre la surface arrière (19) de l'insert porte-contacts (3), d'une part, et le bord marginal arrière (18) du boîtier de prise (2), d'autre part.

2. Prise de remorque selon la revendication 1, **caractérisé en ce que** l'élément de ressort (23) est un joint annulaire.

3. Prise de remorque selon la revendication 1 ou la revendication 2, **caractérisé en ce que** les canaux de réception (6) comprennent des régions d'extrémité (25) ayant un diamètre élargi et faisant face au bord marginal arrière (18) du boîtier de prise (2).

4. Prise de remorque selon la revendication 3, **caractérisé en ce que** des éléments d'étanchéité sont insérés dans des régions d'extrémité (25) élargies.

5. Prise de remorque selon l'une des revendications précédentes, **caractérisé en ce que** l'insert porte-contacts (3) comprend 7 ou 13 canaux de réception.

6. Système de connexion pour des véhicules automobiles, comprenant une prise de remorque (1) selon l'une des revendications précédentes 1 à 5 et une pluralité de contacts à fiches (4) pour être disposés dans la prise de remorque (1).

7. Système selon la revendication 6, **caractérisé en ce que** les contacts à fiches (4) comprennent un corps de contact (10) qui porte des jambes d'encliquetage (12) et des cames de butée (13) axialement espacés de ceux-ci.

8. Système selon la revendication 7, **caractérisé en ce que** la distance axiale entre les jambes d'encliquetage (12) et les cames de butée (13) d'un contact à fiches (4) correspond à la hauteur de la saillie (7) dans le canal de réception associé (6).

9. Système selon la revendication 6, **caractérisé en ce que** l'élément de ressort (23) est un joint annulaire.
